# EUROPEAN PATENT SPECIFICATION

(11) **EP 1 396 837 B1**
(45) Date of publication and mention of the grant of the patent: **23.02.2011**
(21) Application number: 03020084.4
(22) Date of filing: 04.09.2003
(51) Int. Cl.: G09F 3/02, G09F 21/04

(54) **Display sheet and method of manufacturing the same**
Anzeigefläche und Herstellungsverfahren
Feuille d'affichage et méthode de fabrication

(30) Priority: 04.09.2002 JP 2002258860
(43) Date of publication of application: 10.03.2004
(73) Proprietor: KABUSHIKI KAISHA TOKAI RIKA DENKI SEISAKUSHO, Niwa-gun, Aichi 480-0195 (JP); Tsuchiya Co. , Ltd., Nagoya-shi, Aichi (JP)
(72) Inventor: Yamaguchi, Hiroaki, Ohguchi-cho Niwa-gun Aichi (JP); Fujii, Katsutoshi, Nagoya-shi Aichi (JP)
(74) Representative: Grünecker, Kinkeldey, Stockmair & Schwanhäusser Anwaltssozietät

(56) References cited:
- US-A- 2 942 571
- US-A- 5 888 016
- PATENT ABSTRACTS OF JAPAN vol. 2002, no. 08, 5 August 2002 (2002-08-05) & JP 2002 123197 A (YUHSHIN CO LTD), 26 April 2002 (2002-04-26)

## Description

### BACKGROUND OF THE INVENTION

This invention relates to a display sheet used by applying it to such a surface that is formed so as to extend along an outer circumferential surface of a cone; and a method of manufacturing the same.

For example, on an air-conditioning control panel for automobiles, a temperature display is provided on a circumferential portion of a temperature-setting operating knob. Such temperature displays include a plastic display formed by applying a plastic display sheet, on which, for example, numerals are printed, to a flat sheet-applying surface. In a display sheet of such a structure, a sheet-applying surface is formed flat, so that a display surface of the display sheet is also flat. Although the display surface is easily seen front ways, it is difficult that the display surface be seen sideways and diagonally.

Therefore, it is conceivable that, in order to have a display surface of a display sheet seen easily, a sheet-applying surface be formed to such an inclined surface that extends along an outer circumferential surface of a cone, and that the display sheet be applied to this sheet-applying surface. However, when such a structure is employed, the display sheet becomes readily peeled off since a force for returning the display sheet to an original flat shape works on the display sheet.

A display sheet of the following construction is being discussed as a display sheet which solves such problems. This display sheet is obtained by punching a flat plastic sheet into a doughnut-shaped sheet having a circular hole in the central portion thereof, vacuum molding the resultant sheet into such a three-dimensional shape that is in conformity with that of an outer circumferential surface of a cone, and finishing this molded product as a display sheet. A display sheet of such a construction is molded into a sheet of such a three-dimensional shape that is in conformity with that of an outer circumferential surface of a cone, so that, even when this sheet is applied to a sheet-applying surface constituting an inclined surface extending along an outer circumferential surface of a cone, the sheet is rarely peeled off. However, in the display sheet thus formed, the shape thereof is limited to that of a doughnut (shape of a ring), i.e., the shape of the display sheet is greatly restricted. Moreover, the mold cost for the vacuum molding of the plastic sheet and equipment cost are high, so that the display sheet manufacturing cost necessarily becomes high.

US 5 886 016 discloses a display sheet according to the preamble of claim 1.

JP-A-2002-123197 discloses technique for obtaining a display panel by forming a display portion (indicator portion) thereof positioned around an operating knob into a member having an inclined surface extending along an outer circumferential surface of a cone, by an in-mold molding method. However, the in-mold molding of a display sheet of this construction causes the cost of a mold for forming a display sheet and that of equipment needed therefor to become high, so that the display sheet manufacturing cost also becomes high.

### SUMMARY OF THE INVENTION

The present invention has been made in view of these circumstances. One of the objects of the present invention is to provide a display sheet formed so that what is displayed thereon can be seen easily, rarely peeled off from a sheet-applying surface, and little restricted with respect to the shape thereof. Another object of the invention is to provide a method of manufacturing the same display sheet at a low cost.

In order to solve the aforesaid object, the invention is characterized by having the following arrangement.
Aspect 1. A display sheet applied to a sheet-applying surface formed so as to extend along an outer circumferential surface of a cone comprising:
a dual-ended, substantially C-shaped plastic sheet body having a three-dimensional shape with said three-dimensional shape of the plastic sheet body in its natural, unapplied state being in conformity with the shape of the sheet-applying surface.
Aspect 2. A method of manufacturing a display sheet to be applicable to a sheet-applying surface formed so as to extend along an outer circumferential surface of a cone, the method comprising:
providing a flat, dual-ended, substantially C-shaped display sheet plastic sheet body; and
subjecting the display sheet to an annealing process in a state that the display sheet is retained in a three-dimensional shape in conformity with that of the sheet-applying surface, whereby the display sheet has the three-dimensional shape in conformity with that of the sheet-applying surface in a natural, unapplied state.

### BRIEF DESCRIPTION OF THE DRAWINGS

Figs. 1A and 1B is a drawing showing a first embodiment of the present invention, wherein Fig. 1A is a plan view of a display sheet in a punched state; and
Fig. 1B a perspective view of a display sheet which has just been annealed.
Fig. 2 is a front view of an air-conditioning control panel.
Fig. 3 is a perspective view of this control panel.
Fig. 4 is an enlarged sectional view of a principal portion of the control panel, taken along the line X-X in Fig. 2.
Fig. 5 is a sectional view of a jig.
Fig. 6 is a sectional view showing a second example of a jig used in the present invention.
Fig. 7 is a plan view of this jig.

### DETAILED DESCRIPTION OF PREFERRED EMBODIMENTS

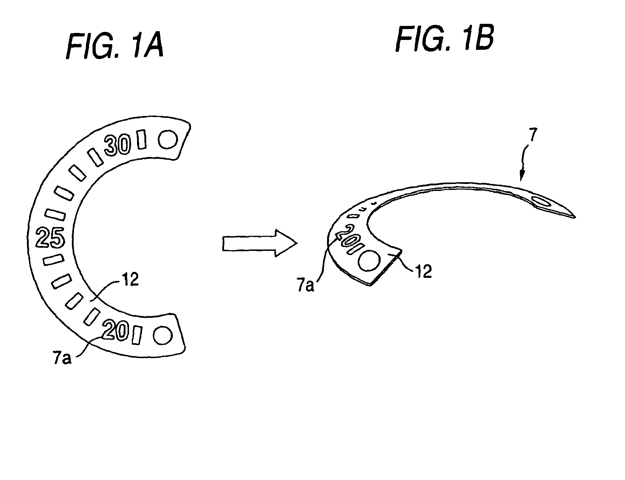

A first embodiment of the present invention will now be described with reference to Fig. 1 to Fig. 5.

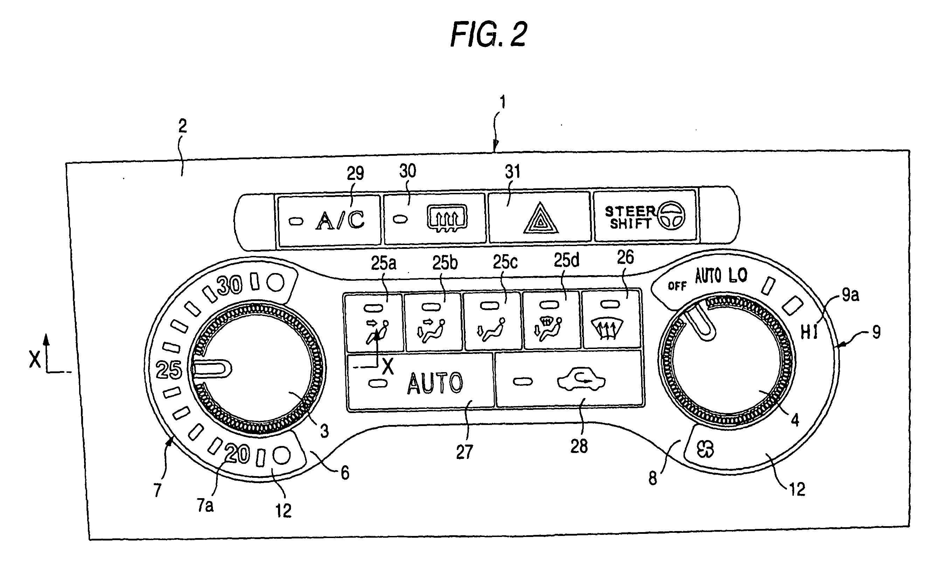

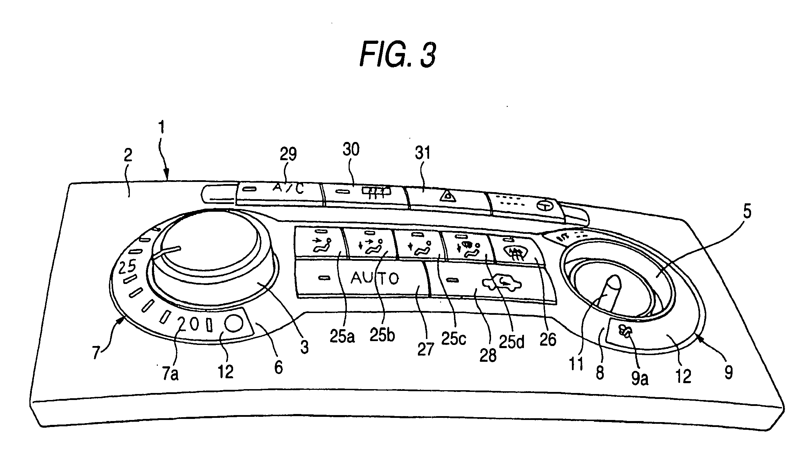

First, Fig. 2 and Fig. 3 show an air-conditioning control panel 1 used for an automobile. On a front surface of the air-conditioning control panel 1, a front plastic panel 2 is provided. Looking at the front panel 2 front ways, a temperature-setting operating knob 3 and an air quantity-setting operating knob 4 for a blower are provided on a left portion and a right portion thereof respectively such that these knobs 3, 4 can be turned. Referring to Fig. 3, the air quantity-setting operating knob 4 is removed.

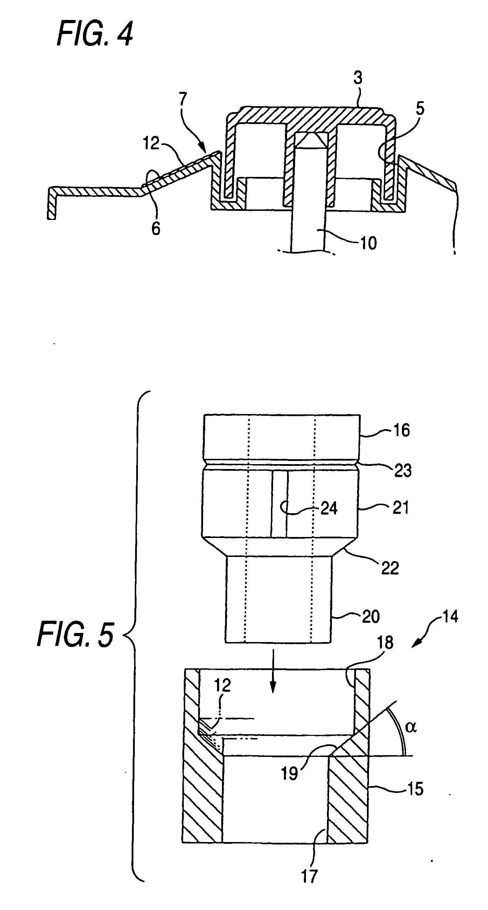

In the portion of the front panel 2 which corresponds to the operating knob 3, a circular opening 5 is formed as shown in Fig. 4. On a circumferential portion of this opening 5, such an inclined sheet-applying surface 6 that extends along an outer circumferential surface of a cone is formed, and a dual-ended, annular (substantially C-shaped) temperature display sheet 7 is applied to the sheet-applying surface 6. On the display sheet 7, temperature display portions 7a are shown.

In the portion as well of the front panel 2 which corresponds to the operating knob 4, a circular opening 5 is formed in the same manner as that on the side of the operating knob 3. On a circumferential portion of the opening 5, such an inclined sheet-applying surface 8 that extends along an outer circumferential surface of a cone is formed. To this sheet-applying surface 8, a dual-ended, annular (substantially C-shaped) air quantity display sheet 9 is applied. An air quantity display portion 9a is shown on the display sheet 9.

The temperature-setting operating knob 3 is mounted on an operating shaft 10 (refer to Fig. 4) for a temperature setting knob (not shown) provided in a rear portion of the front panel 2. The air quantity-setting operating knob 4 is also mounted on an operating shaft 11 (refer to Fig. 3) for an air quantity-setting switch (not shown) provided in a rear portion of the front panel 2.

Although the display sheets 7, 9 differ from each other in that the display sheets 7, 9 have different display portions, i.e., the temperature display portion 7a and air quantity display portion 9a respectively, the remaining portions thereof are identical with each other. Therefore, the temperature display sheet 7 will be representatively described. A body 12 of the display sheet 7 is made of a plastic, which is, in this embodiment, polycarbonate, and has a thickness of about 0.3 mm. A bonding agent-protecting paper (not shown) is applied to a rear surface of the sheet body 12 not yet applied to a sheet-applying portion6.

The display sheet 7 is manufactured in the following manner. First, as shown in Fig. 1A, a flat, substantially dual-ended, annular sheet body 12 is punched with the protective paper. The sheet body 12 is thereafter subjected to an annealing process by using a jig 14 shown in Fig. 5, to obtain a structure in which in the natural state thereof such a three-dimensional shape is maintained that is in conformity with that of the sheet-applying surface 6 as shown in Fig. 1B.

To be concrete, the jig 14 includes a first jig member 15, and a second jig member 16. Both the first and second jigs 15, 16 are made of aluminum. The first jig member 15 has a substantially cylindrical shape, and includes a first cylindrical bore 17 in a lower portion of the interior thereof, a second cylindrical bore 18, the diameter of which is larger than that of the first bore 17, in an upper portion thereof, and a tapering surface 19 connecting these first and second bores 17, 18 together in the intermediate portion thereof which is between the first and second bores. An angle α of inclination of the tapering surface 19 is set to about 28 degrees.

The second jig 16 includes at a lower part thereof a first columnar insert portion 20 to be inserted into the first bore 17, at an upper part thereof a second columnar insert portion 21 to be inserted into the second bore 18, and at the intermediate part thereof which is between the upper and lower insert portions a tapering surface 22 connecting these first insert portion 20 and second insert portion 21 together. An angle of inclination of this tapering surface 22 is also set equal to that α of the tapering surface 19. The second insert portion 21 is provided in an outer circumferential surface thereof with an annular groove 23 extending at right angles to the axial direction thereof, and a vertical groove 24 extending in the same axial direction. The vertical groove 24 is provided solely between the annular groove 23 and tapering surface 22, and opened at an upper end portion thereof on the side of the annular groove 23 and at a lower end portion thereof on the side of the tapering surface 22.

The annealing process for the sheet body 12 is carried out as follows. First, a plurality of punched sheet bodies 12 are laminated, and the laminated sheet bodies are placed on the tapering surface 19 of the first jig member 15. The first insert portion 20 of the second jig member 16 is then inserted into the first bore 17 of the first jig member 15, and the second tapering surface 22 of the second jig member 16 is applied to the laminated sheet bodies 12 from the upper side thereof. As a result, the plural laminated sheet bodies 12 are held between the tapering surface 19 of the first jig member 15 and the tapering surface 22 of the second jig member 16, and kept in such a three-dimensional shape that is in conformity with that of an outer circumferential surface of a cone. During this operation, the vertical groove 24 of the second jig member 16 works as an air vent when the second jig member 16 is inserted into the first jig member 15, and enables the insertion of the second jig member 16 thereinto to be carried out smoothly.

The sheet bodies inclusive of the jig 14 in this condition are inserted into a heating furnace (not shown) and subjected to a heat treatment at about 130°C for 1 to 2 hours. As a result, the temperature of each sheet body 12 exceeds a thermal deformation temperature, and the sheet body 12 is permanently deformed to such a dimensional shape that is in conformity with that of an outer circumferential surface of a cone. The sheet bodies inclusive of the jig 14 are thereafter taken out from the heating furnace, and the first jig member 15 and second jig member 16 are separated from each other to take out each sheet body 12 therefrom. Consequently, each sheet body 12 is retained in a natural state thereof such a three-dimensional shape that is in conformity with that of an outer circumferential surface of a cone as shown in Fig. 1B, thereby manufacturing a display sheet 7.

The protective paper on the rear surface of the display sheet 7 thus manufactured is peeled off, and the resultant display sheet 7 is applied to the sheet-applying surface 6. The display sheet 9 manufactured in the same manner is also applied to the sheet-applying surface 8 in the same manner as the display sheet 7.

Referring to Figs. 2 and 3, on the air-conditioning control panel 1, a plurality of air blow-out port selecting switches 25a to 25d, a front defroster switch 26, an automatic control AUTO switch 27 and an inside-outside air change-over switch 28 are provided between the operating knob 3, 4, and an air-conditioner switch 29, a rear defogger switch 30 and a hazard lamp switch 31 and the like are provided at an upper portion of the panel 1.

In the above-described embodiment, the following effects are obtained. First, since the display sheets 7, 9 are formed so that these display sheets are applied to such sheet-applying surfaces 6, 8 that extend along an outer circumferential surface of a cone, the display surfaces thereof become inclined, so that the display surfaces become easily seen not only front ways but also sideways and diagonally. The sheet bodies 12 of the display sheets 6, 7 are formed as shown in Fig. 1B, to such a structure in which a three-dimensional shape extending in the natural state thereof in conformity with that of the sheet-applying surfaces 6, 8 is retained. Accordingly, even when the sheet bodies 12 are applied to such sheet-applying surfaces 6, 8 that extend along an outer circumferential surface of a cone, a force in the sheet body-peeling direction does not substantially occur, so that the sheet bodies are rarely peeled off and easily applied to the sheet-applying surfaces 6, 8. Since the sheet bodies 12 of the display sheets 7, 9 have a dual-ended, annular shape, the sheet bodies are less restricted with respected to the shape than the sheet bodies the shape of which is limited to a doughnut shape (endless annular shape).

When the display sheets 7, 9 are subjected to an annealing process, the residual strain thereon is removed therefrom, and the three-dimensional shape of these display sheets is retained. Therefore, the display sheets can be applied excellently to such sheet-applying surfaces 6, 8 that extend along an outer circumferential surface of a cone. Since the annealing process can be carried out by heating the sheet bodies 12, which are retained in a three-dimensional shape by the jig 14, at a temperature in excess of a thermal deformation temperature of the sheet bodies 12, a jig and equipment in use may be simpler than those used when a sheet body is obtained by carrying out a vacuum molding process or an in-mold molding process, so that the display sheets 7, 9 can be manufactured at a low cost.

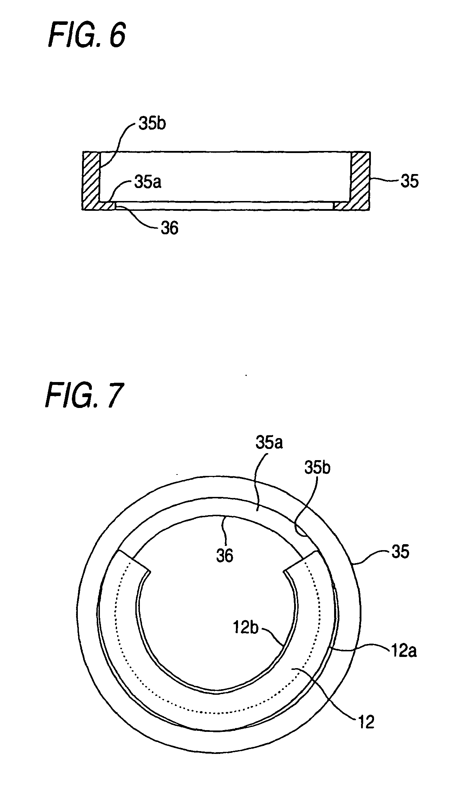

Fig. 6 and Fig. 7 show a second embodiment of the present invention. The second embodiment is different from the above-described first embodiment in the following point. Namely, a jig 35 used when display sheets 7, 9 are subjected to an annealing process is different from the jig 14 used in the first embodiment.

The jig 35 is formed like a circular shallow vessel, and provided with a circular opening 36 in a bottom portion 35a thereof. A radius of curvature of an inner surface of a circumferential wall 35b of the jig 35 is set slightly smaller than that of an outer surface of sheet bodies 12 of display sheets 7, 9.

The annealing of the display sheets 7, 9 is carried out as follows. First, one punched sheet body 12 is inserted into the jig 35, or a plurality of punched sheet bodies 12 are laminated on each other and inserted thereinto. Since the radius of curvature of the inner surface of the circumferential wall 35b of the jig 35 is set slightly smaller than that of the outer surface of the sheet body 12, the sheet body 12 retains such a three-dimensional shape that is in conformity with that of an outer circumferential surface of a cone with an outer circumferential edge portion 12a of the sheet body 12 partially contacting an inner circumferential surface of the circumferential wall 35b as shown in Fig. 7. In this condition, the sheet body 12 is higher at an inner circumferential edge portion 12b thereof than at the outer circumferential edge portion 12a thereof.

The sheet body inclusive of the jig 35 are then placed as they are in a heating furnace (not shown), and thermally treated at about 130°C for 1 to 2 hours in the same manner as in the first embodiment. As a result, the temperature of each sheet body 12 exceeds a thermal deformation temperature thereof, and the sheet body 12 is permanently deformed to such a three-dimensional shape that is in conformity with that of an outer circumferential surface of a cone. The sheet body 12 is then taken out with the jig 35 from the heating furnace, and the finished sheet body is obtained. Owing to these operations, the sheet body 12 retains in the natural state thereof such a three-dimensional shape that is in conformity with that of an outer circumferential surface of a cone as shown in Fig. 1B. The display sheets 7, 9 are thus manufactured.

In such a second embodiment, the jig 35 used, especially, when the sheet body is annealed may be made of only one kind of jig of a simple construction, so that the cost of the jig 35 can further be held down. In the jig 35, the opening 36 in the bottom portion 35a thereof may not be formed.

The present invention is not limited to the above-described embodiments only. The invention can be modified or extended as follows.

The object for which the display sheets 7, 9 are used is not limited to a control panel for an air-conditioner provided in an automobile. The display sheets can also be utilized for household electric appliances.

As is clear from the above description, the display sheet of the invention is advantageous in that what is shown on the display sheet is easily seen; the display sheet is rarely peeled off; and, moreover, the shape of the display sheet is little restricted. According to the display sheet manufacturing method of the invention, the display sheet of the invention can be manufactured at a low cost.

## Claims

1. A display sheet (7, 9) applicable to a sheet-applying surface (6, 8) formed so as to extend along an outer circumferential surface of a cone **characterized in that** it comprises:
a dual-ended, substantially C-shaped plastic sheet body (12) having a three-dimensional shape, with said three-dimensional shape of the plastic sheet body (12) in its natural, unapplied state being in conformity with the shape of the sheet-applying surface (6, 8).

2. A method of manufacturing a display sheet (7, 9) applicable to a sheet-applying surface (6, 8) formed so as to extend along an outer circumferential surface of a cone, the method comprising:
providing a flat, dual-ended, substantially C-shaped display sheet (7, 9) having a plastic sheet body (12);
**characterized by** the further method step of
subjecting the display sheet (7, 9) to an annealing process in a state that the display sheet (7, 9) is retained in a three-dimensional shape in conformity with that of the sheet-applying surface (6, 8), whereby the display sheet (7, 9) has the three-dimensional shape in conformity with that of the sheet-applying surface (6, 8) in a natural, unapplied state.

## Patentansprüche

1. Anzeigetafel (7, 9), die an einer Tafelanbringungsfläche (6, 8) angebracht werden kann, die so ausgebildet ist, dass sie sich an einer Außenumfangsfläche eines Kegels entlang erstreckt, **dadurch gekennzeichnet, dass** sie umfasst:
einen doppelendigen, im Wesentlichen C-förmigen Kunststofftafelkörper (12), der eine dreidimensionale Form hat, wobei die dreidimensionale Form des Kunststofftafelkörpers (12) in ihrem ursprünglichen, nicht angebrachten Zustand mit der Form der Tafelanbringungsfläche (6, 8) übereinstimmt.

2. Verfahren zum Herstellen einer Anzeigetafel (7, 9), die an einer Tafelanbringungsfläche (6, 8) angebracht werden kann, die so ausgebildet ist, dass sie sich an einer Außenumfangsfläche eines Kegels entlang erstreckt, wobei das Verfahren umfasst:
Bereitstellen einer flachen, doppelendigen, im Wesentlichen C-förmigen Anzeigetafel (7, 9), die einen Kunststofftafelkörper (12) hat;
**gekennzeichnet durch** den weiteren Verfahrensschritt, in dem:
die Anzeigetafel (7, 9) einem Wärmebehandlungsprozess in einem Zustand unterzogen wird, in dem die Anzeigetafel (7, 9) in einer dreidimensionalen Form gehalten wird, die mit der der Tafelanbringungsfläche (6, 8) übereinstimmt, wobei die Anzeigetafel (7, 9) in einem ursprünglichen, nicht angebrachten Zustand die dreidimensionale Form hat, die mit der der Tafelanbringungsfläche (6, 8) übereinstimmt.

## Revendications

1. Feuille d'affichage (7, 9) applicable à une surface d'application de feuille (6, 8) formée de manière à s'étendre le long d'une surface circonférentielle externe d'un cône, **caractérisée en ce qu'**elle comprend :
un corps de feuille en plastique (12) sensiblement en forme de C, à deux extrémités, présentant une forme tridimensionnelle, ladite forme tridimensionnelle du corps de feuille en plastique (12) dans son état naturel non appliqué étant en conformité avec la forme de la surface d'application de feuille (6, 8).

2. Procédé de fabrication d'une feuille d'affichage (7, 9) applicable à une surface d'application de feuille (6, 8) formée de manière à s'étendre le long d'une surface circonférentielle externe d'un cône, le procédé consistant à :
prévoir une feuille d'affichage (7, 9) sensiblement en forme de C, à deux extrémités, plate, comportant un corps de feuille en plastique (12) ;
**caractérisé par** l'étape de procédé supplémentaire consistant à :
soumettre la feuille d'affichage (7, 9) à un processus de recuit dans un état dans lequel la feuille d'affichage (7, 9) est maintenue dans une forme tridimensionnelle en conformité avec celle de la surface d'application de feuille (6, 8), moyennant quoi la feuille d'affichage (7, 9) présente la forme tridimensionnelle en conformité avec celle de la surface d'application de feuille (6, 8) dans un état naturel non appliqué.
